# EUROPEAN PATENT SPECIFICATION

(11) **EP 1 268 262 B1**
(45) Date of publication and mention of the grant of the patent: **20.12.2006**
(21) Application number: 01917263.4
(22) Date of filing: 04.04.2001
(51) Int. Cl.: B62D 29/00, B62D 33/04

(54) **VEHICLE FRAME PART**
FAHRZEUGRAHMENTEIL
PARTIE DE CHASSIS DE VEHICULE

(30) Priority: 04.04.2000 GB 0008076
(43) Date of publication of application: 02.01.2003
(73) Proprietor: Expotech Limited, Ballymena BT42 1PY (GB)
(72) Inventor: Robinson, Adrian, Ballymena BT42 1PY (GB)
(74) Representative: Earnshaw, Geoffrey Mark
(86) International application number: PCT/GB2001/001464
(87) International publication number: WO 2001/074649

(56) References cited:
- EP-A- 0 803 403
- DE-U- 29 910 006
- GB-A- 2 347 652

## Description

This invention relates to a vehicle frame part adapted to receive interior finishing pieces or panels, particularly but not exclusively for use with passenger service vehicles such as buses.

Once the frame structure of a passenger service vehicle such as a bus is formed, the interior finishing pieces or panelling are attached to the frame pieces; the interior finishing pieces are the pieces of interior cladding and panelling seen by the passenger.

Naturally, it is desired for the finishing pieces and panels to appear to fit seamlessly on and around the frame pieces, but be securely attached thereto. Presently, such finishing pieces can be bolted onto frame parts. The bolting is conducted by drilling holes into the frame parts through which the bolts are fitted.

Thus, according to the present invention, there is provided an extruded vehicle frame part as claimed in claim 1.

The channels can have any suitable shape, size or design able to fit with interior finishing to trim pieces either directly or indirectly, i.e. via connecting or other fastening fittings or pieces such as screws, bolts, toggles, etc. Other faces of the vehicle frame parts could also have channels therein for connecting with other parts of the vehicle, including interior finishing pieces.

The interior finishing pieces include interior trims, panels, cappings, covings, etc., as are known in the art.

The vehicle frame part must still be able to provide relevant support to the vehicle. Such frame parts are therefore preferably metal such as aluminium, or strong plastic.

The finishing pieces can have a complementary mating means to provide direct conjunction with the channels of the vehicle frame parts. The conjunction of the finishing pieces and the channels of the frame parts may be based on a male-female locking interconnection.

Preferably the lower edges of the flanges form an acute angle with the inner edge of their side walls, so as to provide hook-like edging on one or both sides. This assists the interconnection with complimentary-shaped finishing or connection pieces such as nuts.

Preferably, the finishing pieces and the vehicle frame parts are separable whenever desired or necessary, e.g. for refurbishment or repair of the vehicle interior.

It is recognised that aluminium extrusions having particular configurations of open channels are known from e.g. GB 1334050, US 5934739 or DE 29910006, which last document is taken as basis for the preamble features of claim 1. However, such extrusions have not been used or suggested as suitable for fitting interior pieces in modern passenger service vehicles.

The present invention could be provided in the form of a frame and finishing kit comprising a set of extruded vehicle frame parts as hereinbefore described, and a set of interior finishing pieces having complimentary mating means to provide conjunction with the channels of the vehicle frame parts.

Embodiments of the present invention will now be described by way of example only and with reference to the accompanying diagrammatic drawings in which;
Figures 1-5 which are cross-sectional views of various vehicle frame parts according to the present invention;
Figures 6 and 7 are side and perspective cross-sectional views of the vehicle frame part in Figure 1 with interior roof coving.

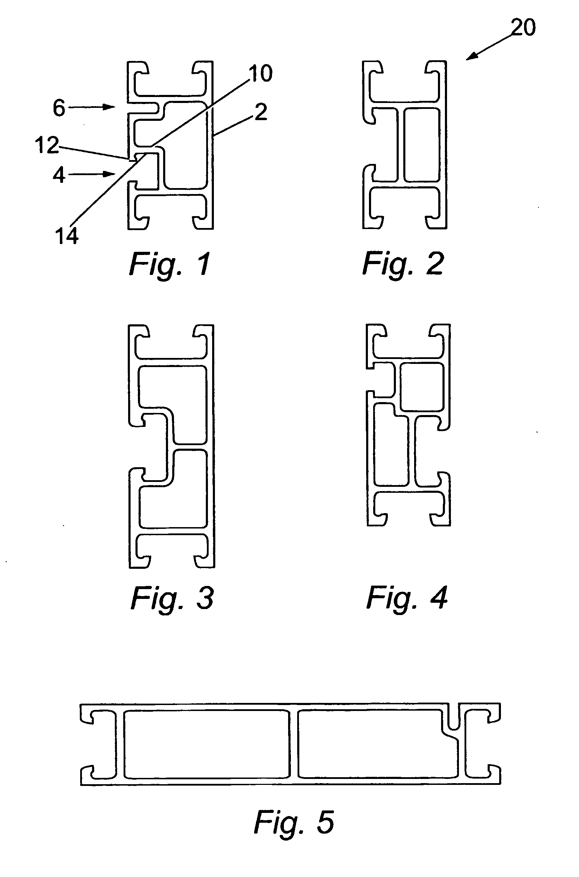

Referring to the drawings, Figures 1-5 show five different extruded vehicle frame parts for use in the construction of the frame of a passenger service vehicle, namely a bus. Different sections of the bus require different vehicle frame parts, but each vehicle frame part shown has one or two inwardly facing channels.

Looking at Figure 1 as a representative example, the frame part 2 has first and second channels 4, 6 able to receive an interior finishing piece. Figure 1 also shows the top of each side wall 10 of one of the channels 4 having inwardly facing flanges 12, the lower edges of which form an acute angle with inner edge of each side wall 14. This provides a hook-like edging along the length of the extrusion part 2.

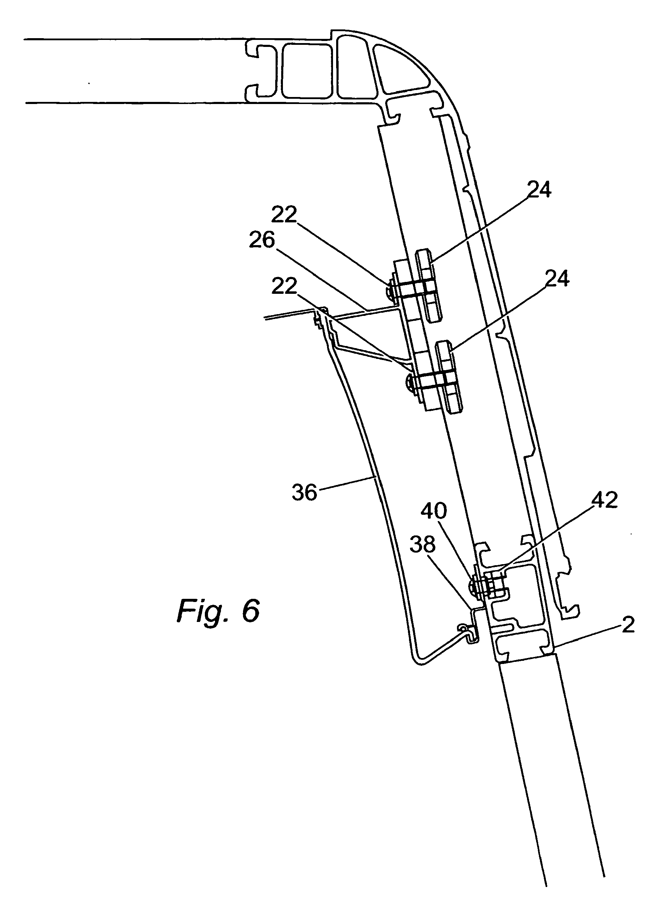

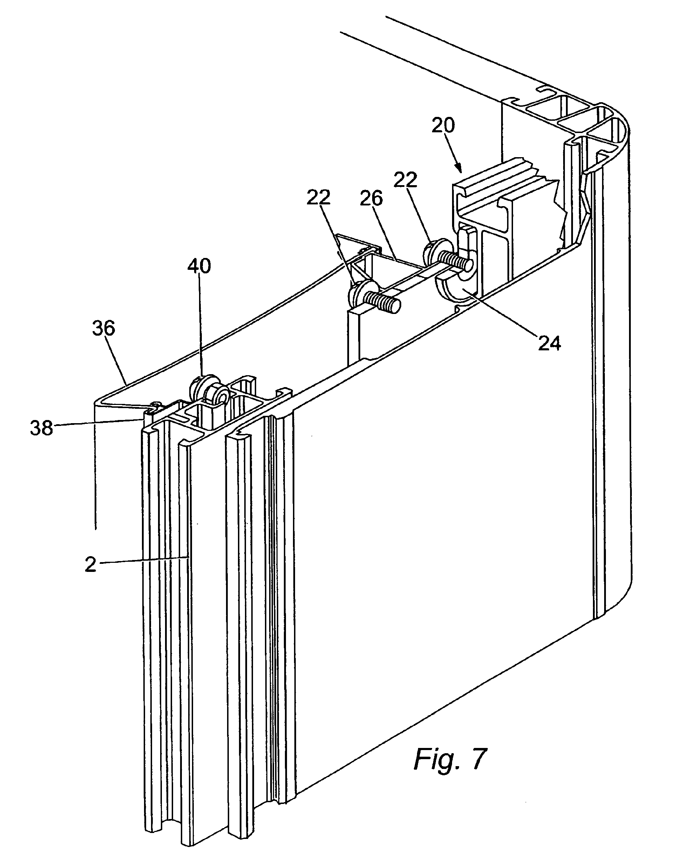

Figures 6 and 7 show the use of the frame part 2 in Figure 1 in a vehicle frame, that is above a window position. There, the first channel 4 is used to support the base of a roof coving piece 36, via support piece 38 and screw 40 and toggle-nut 42. Because of the invention, the screw 40 can be fitted anywhere along the length of the frame part 2, making interior pieces easier to fit. The shape of the nut 42 is complimentary to the hook-like edging of the channel 4, to provide secure inter-engagement once fastened.

Figures 6 and 7 also show the use of the frame part 20 in Figure 2, for securing the screws 22 and nuts 24 in the same manner for an upper support section 26 also holding the cove piece 36.

The present invention provides a simple method of conjoining the interior finishing pieces of a bus to the frame structure. The present invention obviates the need for additional bolts or glue which traditional fitting require. The present invention also avoids the need for holes or apertures to be created in the frame parts to receive e.g. bolts.

## Claims

1. An extruded vehicle frame part (2) having one or more channels (4,6) along its length which face inwardly into the vehicle in use, and for connection of interior finishing pieces (36) thereto, **characterised in that** the top of one or both side walls (14) of said one or more channels (4,6) has inwardly facing flanges (12) wherein the lower edges of the flanges (12) form an acute angle with the inner edge of their side walls (14), so as to provide hook-like edging on one or both sides.

2. A frame part as claimed in Claim 1 wherein the part is aluminium or plastic.

3. A frame part as claimed is any one of the preceding Claims wherein a finishing piece has a complementary mating means to provide conjunction with a channel of the vehicle frame part, and the conjunction of the finishing piece and the channel is based on a male-female locking interconnection.

4. A frame part as claimed in any one of the preceding Claims wherein the finishing pieces (36) and the vehicle frame parts (2) are separable.

5. A frame part as claimed in any one of the preceding Claims wherein one or more of the channels (4,6) are "C" shaped.

6. A frame part as claimed in any one of the preceding Claims wherein an interior piece (36) is fittable directly to one or more channels. (4,6) of the frame part (2).

7. A frame part as claimed in any one of Claims 1-7 wherein an interior piece (36) is fittable to one or more channels (4,6) of the frame part via one or more intermediate connection, fastening or fitting means.

8. A frame part as claimed in any one of the preceding Claims wherein an interior piece is fitted to a frame part using a screw (40) and toggle-nut (42), the toggle-nut (42) being in the channel (4,6).

## Patentansprüche

1. Ein extrudiertes Fahrzeugrahmenteil (2), das einen oder mehrere Kanäle (4, 6) entlang seiner Länge aufweist, die bei Verwendung und zur Verbindung von inneren Fertigstücken (36) damit nach innen in das Fahrzeug weisen, **dadurch gekennzeichnet, dass** die Oberseite einer oder beider Seitenwände (14) des einen oder der mehreren Kanäle (4, 6) nach innen weisende Flansche (12) aufweist, wobei die unteren Kanten der Flansche (12) mit der Innenkante ihrer Seitenwände (14) einen scharfen Winkel bilden, um eine hakenähnliche Einfassung auf einer oder beiden Seiten bereitzustellen.

2. Rahmenteil gemäß Anspruch 1, wobei das Teil aus Aluminium oder Kunststoff ist.

3. Rahmenteil gemäß einem der vorhergehenden Ansprüche, wobei ein Fertigstück ein komplementäres Gegenmittel aufweist, um eine Verknüpfung mit einem Kanal des Fahrzeugrahmenteils bereitzustellen, und die Verknüpfung des Fertigstücks und des Kanals auf einer Einrastkopplung mit Vor-und Rücksprung basiert.

4. Rahmenteil gemäß einem der vorhergehenden Ansprüche, wobei die Fertigstücke (36) und die Fahrzeugrahmenteile (2) trennbar sind.

5. Rahmenteil gemäß einem der vorhergehenden Ansprüche, wobei einer oder mehrere der Kanäle (4, 6) "C"-förmig sind.

6. Rahmenteil gemäß einem der vorhergehenden Ansprüche, wobei ein inneres Stück (36) unmittelbar an einen oder mehrere Kanäle (4, 6) des Rahmenteils (2) gepasst werden kann.

7. Rahmenteil gemäß einem der Ansprüche 1-6, wobei ein inneres Stück (36) über ein oder mehrere dazwischenliegende Verbindungs-, Befestigungs- oder Passmittel an einen oder mehrere Kanäle (4, 6) des Rahmenteils gepasst werden kann.

8. Rahmenteil gemäß einem der vorhergehenden Ansprüche, wobei ein inneres Stück unter Verwendung einer Schraube (40) und einer Knebelmutter (42) an ein Rahmenteil gepasst ist, wobei sich die Knebelmutter (42) in dem Kanal (4, 6) befindet.

## Revendications

1. Une partie de châssis de véhicule extrudée (2) présentant un ou plusieurs canaux (4, 6) sur sa longueur qui font face vers l'intérieur dans le véhicule en utilisation, et destinés au raccordement de pièces de garniture intérieure (36) sur ceux-ci, **caractérisée en ce que** le dessus d'une ou des deux parois de côté (14) desdits un ou plusieurs canaux (4, 6) présente des flasques faisant face vers l'intérieur (12) dans laquelle les bords inférieurs des flasques (12) forment un angle aigu avec le bord interne de leurs parois de côté (14), de façon à fournir une bordure semblable à un crochet sur un ou les deux côtés.

2. Une partie de châssis telle que revendiquée dans la revendication 1 dans laquelle la partie est en aluminium ou en plastique.

3. Une partie de châssis telle que revendiquée dans n'importe laquelle des revendications précédentes dans laquelle une pièce de garniture présente un moyen d'accouplement complémentaire pour fournir une connexion avec un canal de la partie de châssis de véhicule, et la connexion de la pièce de garniture et du canal est basée sur un raccordement mutuel de verrouillage mâle-femelle.

4. Une partie de châssis telle que revendiquée dans n'importe laquelle des revendications précédentes dans laquelle les pièces de garniture (36) et les parties de châssis de véhicule (2) peuvent être séparées.

5. Une partie de châssis telle que revendiquée dans n'importe laquelle des revendications précédentes dans laquelle un ou plusieurs des canaux (4, 6) sont en forme de « C ».

6. Une partie de châssis telle que revendiquée dans n'importe laquelle des revendications précédentes dans laquelle une pièce intérieure (36) peut être assemblée directement sur un ou plusieurs canaux (4, 6) de la partie de châssis (2).

7. Une partie de châssis telle que revendiquée dans n'importe laquelle des revendications 1 à 6 dans laquelle une pièce intérieure (36) peut être assemblée sur un ou plusieurs canaux (4, 6) de la partie de châssis par le biais d'un ou plusieurs moyens de raccordement, d'assujettissement ou d'assemblage intermédiaires.

8. Une partie de châssis telle que revendiquée dans n'importe laquelle des revendications précédentes dans laquelle une pièce intérieure est assemblée sur une partie de châssis à l'aide d'une vis (40) et d'un écrou à garrot (42), l'écrou à garrot (42) se trouvant dans le canal (4, 6).
